# EUROPÄISCHE PATENTSCHRIFT

(11) **EP 1 873 356 B1**
(45) Veröffentlichungstag und Bekanntmachung des Hinweises auf die Patenterteilung: **03.10.2012**
(21) Anmeldenummer: 06013666.0
(22) Anmeldetag: 30.06.2006
(51) Int. Cl.: F01D 5/28, F01D 25/00, F01D 5/04, F01D 5/02, B32B 15/01

(54) **Welle für eine Strömungsmaschine und Verfahren zur Herstellung einer Welle**
Shaft for turbomachine and process for manufacturing
Arbre d'une turbomachine et procédé de fabrication

(43) Veröffentlichungstag der Anmeldung: 02.01.2008
(73) Patentinhaber: SIEMENS AKTIENGESELLSCHAFT, 80333 München (DE)
(72) Erfinder: Kern, Torsten-Ulf, Dr., 46485 Wesel (DE); Wieghardt, Kai, Dr., 44869 Bochum (DE)

(56) Entgegenhaltungen:
- EP-A- 1 574 665
- EP-A- 1 647 671
- EP-A1- 0 207 259
- DE-A1- 19 607 736
- FR-A- 383 059
- GB-A- 616 432
- PATERSON A N ET AL: "STEAM TURBINES FOR ADVANCED STEAM CONDITIONS" TECHNICAL REVIEW GEC ALSTHOM, GEC ALSTHOM, PARIS, FR, Nr. 17, 1. Juni 1995 (1995-06-01), Seiten 1-16, XP000526077 ISSN: 1148-2893

## Beschreibung

Die Erfindung betrifft eine Welle für eine Strömungsmaschine, wobei die Welle einen Welleneinströmabschnitt umfasst, der rotationssymmetrisch um die Wellenachse ausgebildet ist und einen Kernbereich und einen Mantelbereich aufweist, wobei der Welleneinströmabschnitt zur Beaufschlagung mit einem heißen Medium ausgelegt ist. Die Erfindung betrifft des Weiteren ein Verfahren zur Herstellung einer Welle.

Beim Bau von Strömungsmaschinen und insbesondere im Dampfturbinenbau müssen für die Herstellung und für die Eigenschaften der Welle besondere Bedingungen erfüllt werden. In einer Hochdruck-Dampfturbine als Ausführungsform einer Strömungsmaschine liegen die Dampfeintrittstemperaturen des Eintrittsdampfes bei etwa 600°C bis 620°C. Zukünftig werden Dampfeintritttemperaturen von ca. 700°C angestrebt. Bei diesen Temperaturen sind besondere Bedingungen für die chemischen und für die Werkstoffeigenschaften des Wellenmaterials erforderlich. So sollte der Bereich der Welle, der der Dampfeintritttemperatur von bis etwa 620°C standhalten muss, bevorzugt eine hohe Warmfestigkeit aufweisen. Dieser Bereich wird als Welleneinströmbereich oder Welleneinströmabschnitt bezeichnet. Die hohen Temperaturen im Welleneinströmbereich führen derzeit zu einer geeigneten Auswahl von Werkstoffen, die den Anforderungen genügen müssen. Dieser Bereich wird somit als thermisch besonders belastbarer Oberflächenbereich ausgeführt.

Um den hohen thermischen Anforderungen zu genügen, werden beispielsweise Monoblockwellen aus 10%-tigem Chromstahl verwendet, der allerdings vergleichsweise kostspielig ist. Es ist auch bekannt, eine Welle zu schweißen, wobei im Welleneinströmbereich ein Material eingesetzt wird, das den thermischen Anforderungen genügt, beispielsweise 10%tiger Chromstahl und an dieses Material ein weiteres Material angeschweißt wird, das geringeren thermischen Belastungen Stand hält, aber günstiger ist.

In Strömungsrichtung kühlt sich der Dampf ab und die Dampftemperaturen sinken. Die Temperaturbelastung der Welle sinkt dadurch. An diesen Stellen sind demnach andere Eigenschaften gefordert. Hier werden zum Beispiel Eigenschaften wie eine hohe Streckgrenzanforderung und eine sehr gute Kerbschlagfähigkeit und Bruchzähigkeit gefordert. Besonders in einer kombinierten Hochdruck-Niederdruck-Dampfturbine ändern sich durch den sinkenden Temperaturverlauf die chemischen und Werkstoffeigenschaften der Welle in Strömungsrichtung.

In der DE 196 07 736 A1 wird eine Turbinenwelle vorgeschlagen, die für hohe thermische Belastungen eingesetzt werden kann und unterschiedliche Materialien umfasst. Hierbei wird eine axial zweiteilige Turbinenwelle, insbesondere für eine Dampfturbine, welche entlang einer Wellenachse gerichtet ist, in zwei axial gerichtete Bereiche eingeteilt, wobei der erste axial gerichtete Bereich und der an den ersten axialen Bereich anschließende zweite axial gerichtete Bereich unterschiedliche Stahllegierungen mit unterschiedlichen Gewichtsprozenten an Chrom aufweisen und axial voneinander befestigt sind.

In der EP 1 574 665 wird ein Rotor mit einem ersten und einem zweiten Material offenbart, wobei das zweite Material das erste Material ummantelt.

Aufgabe der Erfindung ist es, eine Welle, insbesondere für eine Dampfturbine, anzugeben, die bei hohen thermischen Belastungen eingesetzt werden kann. Eine weitere Aufgabe der Erfindung besteht darin, ein Verfahren zur Herstellung einer solchen Welle anzugeben.

Erfindungsgemäß wird die auf die Welle bezogene Aufgabe gelöst durch eine Welle für eine Strömungsmaschine gemäß Anspruch 1 und Anspruch 2.

Vorteilhafte Ausgestaltungen der Erfindung sind in den Unteransprüchen beschrieben.

Die Erfindung geht von dem Aspekt aus, dass diejenigen Abschnitte des Rotors geändert werden sollten, die thermisch stark belastet sind. Dazu wird erfindungsgemäß vorgeschlagen die thermisch belasteten Abschnitte, z.B. den Welleneinströmabschnitt, der durch den einströmenden Frischdampf, der ca. 600°C bis 620°C umfassen kann, mit einem rotationssymmetrisch um die Wellenachse ausgebildeten Mantelbereich auszubilden, der ein Material aufweist, das den hohen Temperaturen Stand hält. Es ist daher nicht erforderlich, eine vergleichsweise kostspielige Monoblockwelle aus einem 10%tigen Chromstahl zu verwenden. Es ist ebenfalls nicht erforderlich, eine Welle in axialer Richtung zu verschweißen.

Der Vorteil besteht unter anderem darin, dass gefährdete Bereiche auf der Welle, d.h. Bereiche, die einer erhöhten Temperatur ausgesetzt sind, gezielt geändert werden. Es kann mit vergleichsweise geringem Aufwand der Einströmbereich der Welle durch einen Mantelbereich aus einem geeigneten Material verstärkt werden. Durch diese Maßnahme kann die Welle höheren Temperaturen ausgesetzt werden, wobei Temperaturen von 700°C als möglich erscheinen.

In einer vorteilhaften Weiterbildung ist der Mantelbereich als Hülse ausgebildet. Die Fertigung von Hülsen ist vergleichsweise einfach, wodurch sich die Fertigung der gesamten Welle beschleunigen lässt. Dadurch verringern sich auch die Kosten für die Herstellung einer solchen Welle.

Der Mantelbereich ist aus dem Material A617 oder A783 gefertigt.

Der Kernbereich der Welle ist aus einem 1 bis 2 Gew.-%tigen Chromstahl gefertigt.

In vorteilhafter Weise kann der Mantelbereich auf den Kernbereich angeschweißt werden, wodurch eine sichere Verbindung zwischen dem Mantelbereich und dem Kernbereich hergestellt wird.

In einer vorteilhaften Weiterbildung kann der Mantelbereich auf den Kernbereich aufgeschrumpft werden, wodurch sich die Fertigung der Welle beschleunigen lässt.

Zweckmäßigerweise wird der Mantelbereich in einer im Kernbereich befindlichen Ausnehmung angeordnet.

In vorteilhafter Weise umfasst die Welle ein Vorderteilstück, ein in Richtung der Wellenachse gesehen angeordnetes Hinterteilstück und zwischen dem Vorderteilstück und dem Hinterteilstück der Kernbereich. Das Vorderteilstück und das Hinterteilstück kann in vorteilhafter Weise an den Kernbereich angeschweißt werden.

In einer vorteilhaften Weiterbildung sind zwischen dem Mantelbereich und dem Kernbereich Kühlkanäle zum Führen eines Kühlmediums ausgebildet. Der Vorteil besteht unter anderem darin, dass ein Kühlkanal in einfacher Art und Weise in der Welle ausgebildet werden kann, wodurch die Welle bei hohen Temperaturen verwendet werden kann.

In einer vorteilhaften Weiterbildung weist der Kernbereich in Richtung der Wellenachse gesehen, zumindest einen zahnartigen auf dem äußeren Umfang angeordneten Zahn-Kern-Vorsprung auf und der Mantelbereich eine zu dem Zahn-Kern-Vorsprung komplementär ausgebildeten Mantelbereichs-Vertiefung auf, wobei der Zahn-Kern-Vorsprung in die Mantelbereichs-Vertiefung greift.

Anhand der nachfolgenden Beschreibung werden Ausführungsbeispiele der Erfindung unter Bezugnahme auf die Zeichnungen näher erläutert.

Es zeigen schematisch und nicht maßstäblich:
- Figur 1: einen Längsschnitt einer Hochdruck-Teilturbine,
- Figur 2: einen Längsschnitt eines Teilbereichs einer Welle,
- Figur 3: einen Längsschnitt eines Teilbereichs einer Welle,
- Figur 4: einen Ausschnitt eines Teilbereichs der Welle,
- Figur 5: einen Ausschnitt eines Teilbereichs einer Welle,
- Figur 6: eine Welle mit aufgeschrumpften Mantelbereich,
- Figur 7: eine Welle mit Mantelbereich und Kühlkanälen,
- Figur 8: eine Querschnittsansicht einer Welle,
- Figur 9: eine vergrößerte Darstellung des Bereiches A aus Figur 8,
- Figur 10: eine vergrößerte Darstellung des Bereiches A aus Figur 8,
- Figur 11: eine vergrößerte Darstellung des Bereichs A aus Figur 11.

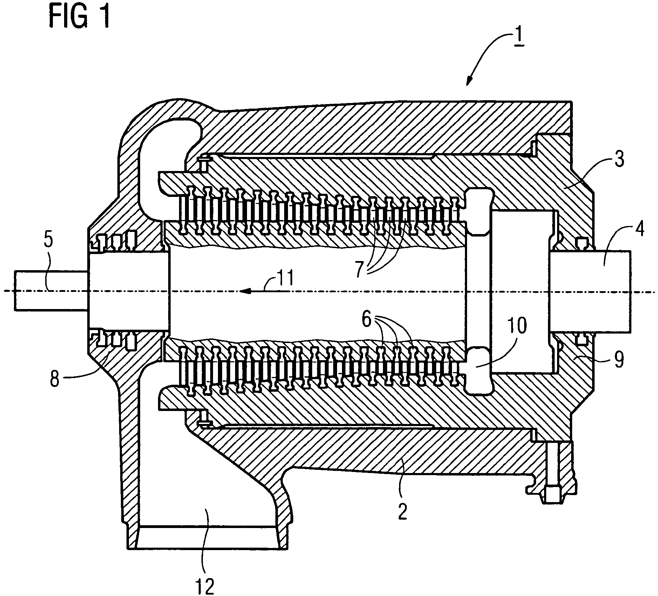

In Figur 1 ist eine Hochdruck-Dampfturbine 1 dargestellt. Die Hochdruck-Dampfturbine 1 weist ein Außengehäuse 2 und ein Innengehäuse 3 auf. Innerhalb des Innengehäuses 3 ist eine Welle 4 rotationssymmetrisch um die Wellenachse 5 drehgelagert angeordnet. Die Welle 4 umfasst mehrere Laufschaufeln 6 auf, wobei in der Figur 1 lediglich drei Laufschaufeln 6 mit dem Bezugszeichen 6 versehen sind. Das Innengehäuse 3 weist zwischen den Laufschaufeln 6 angeordnete Leitschaufeln 7 auf. Die Welle 4 ist mittels der Lager 8, 9 drehbar gelagert.

Im Betrieb strömt Frischdampf von ca. 600°C bis 620°C in den Einströmbereich 10 ein. Der Dampf strömt in Strömungsrichtung 11 abwechselnd an den Leit- 7 bzw. Laufschaufeln 6 vorbei. Die Temperatur und der Druck des Dampfes nehmen in Strömungsrichtung 11 ab. Im Ausströmbereich 12 strömt der Dampf aus der Hochdruck-Dampfturbine 1 aus. Die Welle 4 wird hierbei in Drehung versetzt.

Eine thermisch hochbelastete Stelle bzw. ein thermisch hochbelasteter Bereich auf der Welle bzw. auf dem Innengehäuse 3 ist der Bereich um den Einströmbereich 10, denn dort ist die Temperatur und der Druck des Dampfes vergleichsweise hoch. Der Druck und die Temperatur des Dampfes nimmt in Strömungsrichtung 11 ab, so dass die thermische Belastung der Welle und des Innengehäuses in Strömungsrichtung abnimmt.

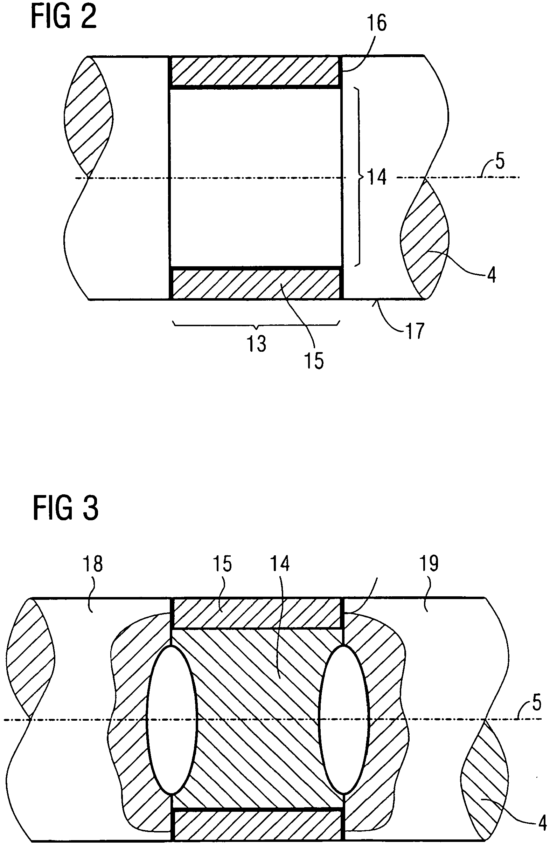

In der Figur 2 ist ein Ausschnitt der Welle 4 dargestellt. Die Welle 4 weist einen Welleneinströmabschnitt 13 auf, der thermisch stark belastet ist und im Bereich der Welleneinströmung 10 sich befindet. Der Welleneinströmabschnitt 13 ist rotationssymmetrisch um die Wellenachse 5 ausgebildet und weist einen Kernbereich 14 und einen Mantelbereich 15 auf. Der Welleneinströmabschnitt 13 ist zur Beaufschlagung mit einem heißen Medium, z. B. Frischdampf, ausgelegt. Der Mantelbereich 15 ist um den Kernbereich 14 angeordnet, wobei der Mantelbereich 15 und der Kernbereich 14 unterschiedliche Materialien aufweisen und der Mantelbereich 15 den Welleneinströmabschnitt 13 umfasst.

Der Mantelbereich 15 kann als Hülse ausgebildet sein. Der Mantelbereich ist aus dem Material A617 gefertigt, wobei das Material A617 folgende Elemente aufweist:

| | |
|---|---|
| 0,05 - 0,10 | Gew.-% C, |
| <= 0,20 | Gew.-% Si, |
| <= 0,20 | Gew.-% Mn, |
| <= 0,010 | Gew.-% P, |
| <= 0,010 | Gew.-% S, |
| 20,0 - 23,0 | Gew.-% Cr, |
| 8,5 - 10,0 | Gew.-% Mo, |
| 0,70 - 1,40 | Gew.-% Al |
| 11,0 - 14,0 | Gew.-% Co, |
| <= 0,50 | Gew.-% Cu, |
| <= 2,0 | Gew.-% Fe, |
| 0,20 - 0,60 | Gew.-% Ti, |
| <= 0,006 | Gew.-% B, |
| Rest Ni. | |

In einer alternativen Ausführungsform kann der Mantelbereich aus dem Material A783 gefertigt sein, wobei das Material A783 folgende Elemente aufweist:
≤ 0,03 Gew.-% C
≤ 0,50 Gew.-% Si
≤ 0,50 Gew.-% Mn
≤ 0,015 Gew.-% P
≤ 0,005 Gew.-% S
2,50 - 3,50 Gew.-% Cr
2,50 - 3,50 Gew.-% Nb
5,0 - 6,0 Gew.-% Al
≤ 0,50 Gew.-% Cu
24,0 - 27,0 Gew.-% Fe
0,10 - 0,40 Gew. -% Ti
0,003 - 0,012 Gew. -% B
26,0 - 30,0 Gew. -% Ni
Rest Co.

Der Kernbereich 14 ist aus einem 1 bis 2 Gew-%igen Chromstahl gefertigt, wobei der Kernbereich folgende Elemente aufweist:

| | |
|---|---|
| 0,28 - 0,34 | Gew.-% C, |
| <= 0,15 | Gew.-% Si, |
| 0,30 - 0,80 | Gew.-% Mn, |
| <= 0,010 | Gew.-% P, |
| <= 0,007 | Gew.-% S, |
| 1,10 - 1,40 | Gew.-% Cr, |
| 1,00 - 1,20 | Gew.-% Mo, |
| 0,50 - 0,75 | Gew.-% Ni, |
| 0,25 - 0,35 | Gew.-% V, |
| <= 0,010 | Gew.-% Al, |
| Rest Fe. | |

Der Mantelbereich 15 wird auf den Kernbereich 14 angeschweißt. In einer alternativen Ausführungsform kann der Mantelbereich auf den Kernbereich 14 aufgeschrumpft werden.

Der Mantelbereich 15 kann in eine im Kernbereich 14 befindliche Ausnehmung 16 angeordnet werden, wodurch die Oberfläche 17 der Welle 4 keine Unstetigkeit aufweist.

In der Figur 3 ist eine alternative Ausführungsform der Welle 4 dargestellt. Die Welle 4 weist hierbei ein Vorderteilstück 18, ein in Richtung der Wellenachse 5 gesehen, dahinter angeordnetes Hinterteilstück 19 auf, wobei zwischen dem Vorderteilstück 18 und dem Hinterteilstück 19 der Kernbereich 14 angeordnet ist. Das Vorderteilstück 18 und das Hinterteilstück 19 kann an den Mantelbereich 15 und/oder an den Kernbereich 14 angeschweißt werden. Das Vorderteilstück 18 und das Hinterteilstück 19 ist aus einem 1 bis 2 Gew. -%igen Chromstahl gefertigt. In alternativen Ausführungsformen können das Vorderteilstück 18 und das Hinterteilstück 19 unterschiedliche Materialien aufweisen.

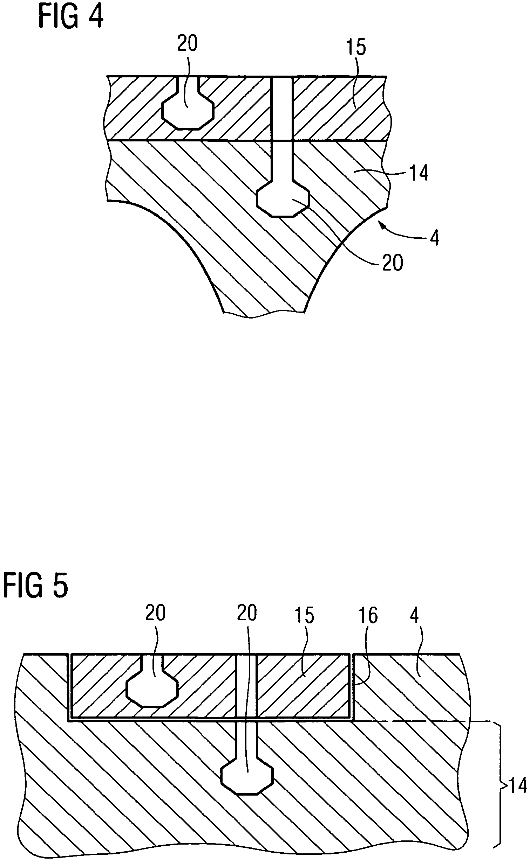

In der Figur 4 ist ein Ausschnitt des Rotors 4 zu sehen. Die Laufschaufeln 6 weisen Laufschaufelfüße auf, die in entsprechende Laufschaufelnuten 20 angeordnet sind. Die Laufschaufelnut 20 kann im Mantelbereich 15 angeordnet sein. In alternativen Ausführungsformen kann die Nut 20 im Kernbereich angeordnet werden.

In der Figur 5 ist eine ähnliche Darstellung wie gemäß Figur 4 zu sehen. Der Unterschied zu Figur 5 und Figur 4 ist der, dass der Mantelbereich 15 in einer Ausnehmung 16 angeordnet ist.

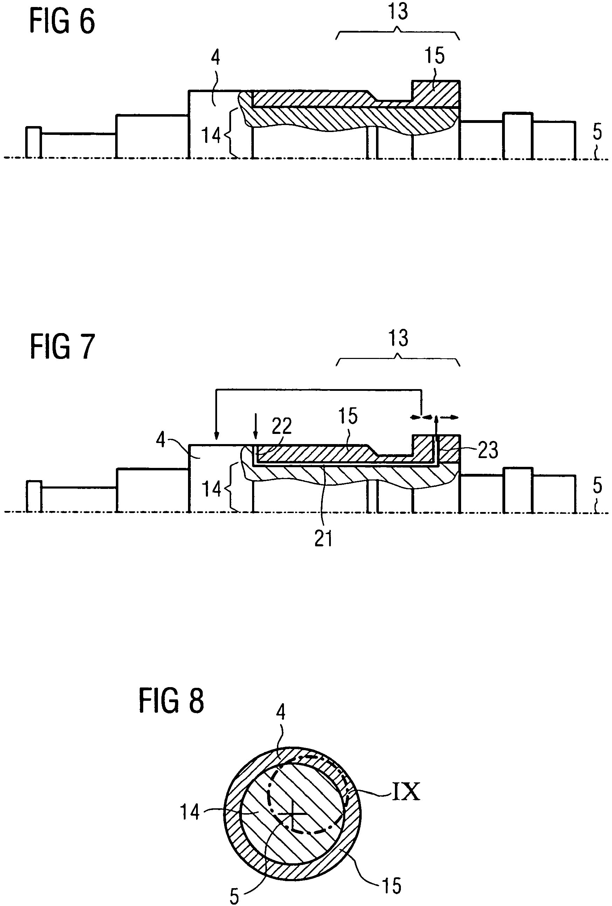

In Figur 6 ist ein weiterer Längsschnitt des Rotors 4 zu sehen. Der Mantelbereich 15 kann als Hülse ausgebildet werden und bei der Fertigung von rechts über den Kernbereich 14 gestülpt werden.

In der Figur 7 ist ein Kühlkanal 21 dargestellt. Der Kühlkanal 21 ist zwischen dem Mantelbereich 15 und dem Kernbereich 14 angeordnet. Durch den Kühlkanal 21 strömt an einer ersten Stelle 22 Kühldampf in den Kühlkanal 21 ein und an einer zweiten Stelle 23 aus dem Kühlkanal 21 heraus. Der Kühldampf weist an der ersten Stelle 22 eine niedrige Temperatur auf. Der Kühldampf wird auf dem Weg von der ersten Stelle zur zweiten Stelle 23 infolge des im Welleneinströmabschnitt 13 auftreffenden Frischdampfs erwärmt.

In der Figur 8 ist eine Querschnittsansicht der Welle 4 dargestellt. Der Mantelbereich 15 ist über dem Kernbereich 14 angeordnet.

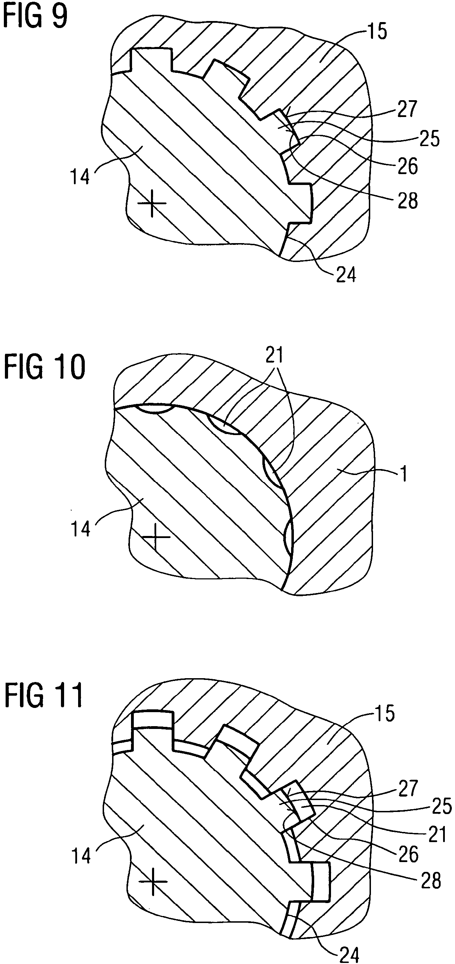

In der Figur 9 ist der Bereich IX der Figur 8 vergrößert dargestellt. Der Kernbereich 14 weist einen zahnartigen, auf den äußeren Umfang 24 angeordneten Zahn-Kern-Vorsprung 25 auf, wobei der Mantelbereich einen zum Zahn-Kern-Vorsprung 25 komplementär ausgebildeten Mantelbereichs-Vertiefung 26 aufweist, wobei der Zahn-Kern-Vorsprung 25 in die Mantelbereichs-Vertiefung 26 eingreift.

Sinngemäß kann in einer alternativen, nicht näher dargestellten Ausführungsform der Mantelbereich in Richtung der Wellenachse gesehen, zumindest einen zahnartigen auf dem inneren Umfang angeordneten Zahn-Mantel-Vorsprung aufweisen und der Kernbereich eine zu dem Zahn-Mantel-Vorsprung komplementär ausgebildete Kernbereichs-Vertiefung aufweisen, wobei der Zahn-Mantel-Vorsprung in die Kernbereichs-Vertiefung greift.

Der Zahn-Kern-Vorsprung 25 weist eine radial nach außen weisende Zahn-Kern-Vorsprungsoberfläche 27 und die Mantelbereichs-Vertiefung 26 eine radial nach innen weisende Mantelbereichs-Vertiefungsoberfläche 28 auf, wobei der Zahn-Kern-Vorsprung 25 und die Mantelbereichs-Vertiefung 26 derart ausgebildet sind, dass der Kühlkanal 21 zwischen der Zahn-Kern-Vorsprungsoberfläche 27 und der Mantelbereichs-Vertiefungsoberfläche 28 verläuft, was in der Figur 11 dargestellt ist.

In der Figur 10 ist eine alternative Ausführungsform zur Ausgestaltung der Kühlkanäle 21 dargestellt, wobei in dieser Ausführungsform die Kühlkanäle 21 in Richtung der Wellenachse 5 gesehen eine Kernbereichs-Ausnehmung aufweist, die ein halbrundes oder eckiges Profil aufweist.

Sinngemäß weist der Zahn-Mantel-Vorsprung eine radial nach innen weisende Zahn-Mantel-Vorsprungoberfläche und der die Kernbereichs-Vertiefung eine radial nach außen weisende Kernbereichs-Vertiefungsoberfläche auf, wobei der Zahn-Mantel-Vorsprung und die Kernbereichs-Vertiefung derart ausgebildet sind, dass der Kühlkanal 21 zwischen der Zahn-Mantel-Vorsprungsoberfläche und der Kernbereichs-Vertiefungsoberfläche verläuft.

Der Kühlkanal 21 verläuft in axialer Richtung parallel zur Wellenachse. In alternativen Ausführungsformen kann der Kühlkanal in axialer Richtung spiralförmig um die Wellenachse 5 verlaufen.

Die Welle ist zur Anordnung in einer Dampfturbine ausgebildet und der Mantelbereich an einer thermisch belasteten Stelle angeordnet, wobei die thermisch belastete Stelle der Einströmbereich 10 ist und im Bereich der Frischdampfzuführung liegt.

Die Erfindung zeichnet sich auch durch ein Verfahren zur Herstellung der Welle gemäß Anspruch 22 aus.

Das Material A617 wird im Welleneinströmbereich auf den Kernbereich umfassend den Grundwerkstoff 1 bis 2%igen CrMoV aufgeschweißt, wobei eine Wärmenachbehandlung bei 670°C bis 730°C erfolgt um die Eigenspannungen zu reduzieren, um die Anlasswirkung in der Wärmeeinflusszone zu erzielen, und um die finale Festigkeit im 1 bis 2%igen Chromstahl einzustellen. Die Wärmeausdehnungskoeffizienten A von dem Material A617 und dem 1 bis 2%igen Chromstahl sind vergleichbar. Durch die Auftragsschweißung mit dem Material A617 und dem auftretenden Temperaturgradienten nach innen wird der 1 bis 2%ige Chromstahl im Kriechbereich gestützt.

Der Werkstoff A617 kann als Hülse hergestellt werden und auf eine Scheibe aus 1 bis 2%igen Chromstahl aufgeschrumpft werden, wobei eine Arbeitstemperatur von T < 630°C herrscht. Anschließend kann eine solch gebildete Duplexscheibe mit Wellenenden aus 1 bis 2%igem Chromstahl mit einem Schweißgut, z. B. 2,25 CrMoV, verschweißt werden und bei 670°C bis 730°C einer Wärmenachbehandlung unterzogen werden, um die Eigenspannungen zu reduzieren und die Anlasswirkung in der Wärmeeinflusszone zu erzielen, und um die finale Festigkeit im 1 bis 2%igen Chromstahl einzustellen.

## Patentansprüche

1. Welle (4) für eine Strömungsmaschine,
wobei die Welle (4) einen Welleneinströmabschnitt (13) umfasst,
der rotationssymmetrisch um die Wellenachse (5) ausgebildet ist
und einen Kernbereich (14) und einen Mantelbereich (15) aufweist,
wobei der Kernbereich (14) aus einem 1 Gew.-% bis 2 Gew.-% Cr-Stahl gefertigt ist,
wobei der Welleneinströmabschnitt (13) zur Beaufschlagung mit einem heißen Medium ausgelegt ist,
wobei der Mantelbereich (15) um den Kernbereich (14) angeordnet ist und
der Mantelbereich (15) und Kernbereich (14) unterschiedliche Materialien aufweisen und
der Mantelbereich (15) den Welleneinströmabschnitt (13) umfasst,
**dadurch gekennzeichnet, dass**
der Mantelbereich (15) aus dem Material A617 gefertigt ist, wobei das Material A617 folgende Elemente aufweist:
| | |
|---|---|
| 0.05 - 0.10 | Gew.-% C, |
| <= 0.20 | Gew.-% Si, |
| <= 0.20 | Gew.-% Mn, |
| <= 0.010 | Gew.-% P, |
| <= 0.010 | Gew.-% S, |
| 20.0 - 23.0 | Gew.-% Cr, |
| 8.5 - 10.0 | Gew.-% Mo, |
| 0.70 - 1.40 | Gew.-% Al, |
| 11.0 - 14.0 | Gew.-% Co, |
| <= 0.50 | Gew.-% Cu, |
| <= 2.0 | Gew.-% Fe, |
| 0.20 - 0.60 | Gew.-% Ti, |
| <= 0.006 | Gew.-% B, |
| Rest Ni. | |

2. Welle (4) für eine Strömungsmaschine,
wobei die Welle (4) einen Welleneinströmabschnitt (13) umfasst,
der rotationssymmetrisch um die Wellenachse (5) ausgebildet ist
und einen Kernbereich (14) und einen Mantelbereich (15) aufweist,
wobei der Kernbereich (14) aus einem 1 Gew.-% bis 2 Gew.-% Cr-Stahl gefertigt ist,
wobei der Welleneinströmabschnitt (13) zur Beaufschlagung mit einem heißen Medium ausgelegt ist,
wobei der Mantelbereich (15) um den Kernbereich (14) angeordnet ist und
der Mantelbereich (15) und Kernbereich (14) unterschiedliche Materialien aufweisen und
der Mantelbereich (15) den Welleneinströmabschnitt (13) umfasst,
**dadurch gekennzeichnet, dass**
der Mantelbereich (15) aus dem Material A 783 gefertigt ist,
wobei das Material A783 folgende Elemente aufweist:
| | |
|---|---|
| ≤ 0.03 | Gew.-% C |
| ≤ 0.50 | Gew.-% Si |
| ≤ 0.50 | Gew.-% Mn |
| ≤ 0.015 | Gew.-% P |
| ≤ 0.005 | Gew.-% S |
| 2.50 - 3.50 | Gew.-% Cr |
| 2.50 - 3.50 | Gew.-% Nb |
| 5.0 - 6.0 | Gew.-% Al |
| ≤ 0.50 | Gew.-% Cu |
| 24.0 - 27.0 | Gew.-% Fe |
| 0.10 - 0.40 | Gew.-% Ti |
| 0.003 - 0.012 | Gew.-% B |
| 26.0 - 30.0 | Gew.-% Ni |
| Rest Co. | |

3. Welle (4) nach Anspruch 1,
wobei der Mantelbereich (15) als Hülse ausgebildet ist.

4. Welle (4) nach Ansprüche 3, wobei der Kernbereich (14) folgende Elemente aufweist:
| | |
|---|---|
| 0.28 - 0.34 | Gew.-% C, |
| <= 0.15 | Gew.-% Si, |
| 0.30 - 0.80 | Gew.-% Mn, |
| <= 0.010 | Gew.-% P, |
| <= 0.007 | Gew.-% S, |
| 1.10 - 1.40 | Gew.-% Cr, |
| 1.00 - 1.20 | Gew.-% Mo, |
| 0.50 - 0.75 | Gew.-% Ni, |
| 0.25 - 0.35 | Gew.-% V, |
| <= 0.010 | Gew.-% Al, |
| Rest Fe. | |

5. Welle (4) nach einem der vorhergehenden Ansprüche, wobei der Mantelbereich (15) auf dem Kernbereich (14) angeschweißt ist.

6. Welle (4) nach einem der Ansprüche 1 bis 4,
wobei der Mantelbereich (15) auf dem unteren Bereich aufgeschrumpft ist.

7. Welle (4) nach einem der vorhergehenden Ansprüche, wobei der Mantelbereich (15) in einer im Kernbereich (14) befindlichen Ausnehmung (16) angeordnet ist.

8. Welle (4) nach einem der vorhergehenden Ansprüche, die ein Vorderteilstück (18),
ein in Richtung der Wellenachse (5) gesehen,
dahinter angeordnetes Hinterteilstück (19) umfasst wobei zwischen dem Vorderteilstück (18) und dem Hinterteilstück (19) der Kernbereich (14) angeordnet ist.

9. Welle (4) nach Anspruch 8,
wobei das Vorderteilstück (18) und das Hinterteilstück (19) an den Mantelbereich (15) und/oder an den Kernbereich (14) angeschweißt sind.

10. Welle (4) nach Anspruch 8 oder 9,
wobei das Vorderteilstück (18) und das Hinterteilstück (19) aus einem 1 Gew.-% bis 2 Gew.-% Cr-Stahl gefertigt sind.

11. Welle (4) nach einem der vorhergehenden Ansprüche, wobei zwischen dem Mantelbereich (15) und dem Kernbereich (14) Kühlkanäle zum Führen eines Kühlmediums ausgebildet sind.

12. Welle (4) nach einem der vorhergehenden Ansprüche, wobei der Kernbereich (14),
in Richtung der Wellenachse (5) gesehen,
zumindest einen zahnartigen, auf dem äußeren Umfang angeordneten Zahn-Kern-Vorsprung (25) aufweist und
der Mantelbereich (15) eine zum Zahn-Kern-Vorsprung (25) komplementär ausgebildete Mantelbereichs-Vertiefung (26) aufweist,
wobei der Zahn-Kern-Vorsprung (25) in die Mantelbereichs-Vertiefung (26) greift.

13. Welle (4) nach Anspruch 16,
wobei der Zahn-Kern-Vorsprung (25) eine radial nach außen weisende Zahn-Kern-Vorsprungsoberfläche (27) und
die Mantelbereichs-Vertiefung (26) eine radial nach innen weisende Mantelbereichs-Vertiefungsoberfläche (28) aufweist,
wobei der Zahn-Kern-Vorsprung (25) und die Mantelbereichs-Vertiefung (26) derart ausgebildet sind, dass der Kühlkanal (21) zwischen der Zahn-Kern-Vorsprungsoberfläche (27) und der Mantelbereichs-Vertiefungsoberfläche (28) verläuft.

14. Welle (4) nach einem der Ansprüche 1 bis 11,
wobei der Mantelbereich (15),
in Richtung der Wellenachse (5) gesehen,
zumindest einen zahnartigen, auf dem inneren Umfang angeordneten Zahn-Mantel-Vorsprung aufweist und
der Kernbereich (14) eine zu dem Zahn-Mantel-Vorsprung komplementär ausgebildete Kernbereichs-Vertiefung aufweist, wobei der Zahn-Mantel-Vorsprung in die Kernbereichs-Vertiefung greift.

15. Welle (4) nach Anspruch 13,
wobei der Zahn-Mantel-Vorsprung eine radial nach innen weisende Zahn-Mantel-Vorsprungsoberfläche und
die Kernbereichs-Vertiefung eine radial nach außen weisende Kernbereichs-Vertiefungsoberfläche aufweist,
wobei der Zahn-Mantel-Vorsprung und die Kernbereichs-Vertiefung derart ausgebildet sind,
dass der Kühlkanal (21) zwischen der Zahn-Mantel-Vorsprungsoberfläche und der Kernbereichs-Vertiefungsoberfläche verläuft.

16. Welle (4) nach Anspruch 11,
wobei der Kühlkanal (21) zwischen einer Kernbereichs-Ausnehmung auf der Oberfläche des Kernbereichs (14) und der radial nach innen weisenden Oberfläche (17) des Mantelbereichs verläuft.

17. Welle (4) nach Anspruch 16,
wobei die Kernbereichs-Ausnehmung ein, in Richtung der Wellenachse (5) gesehen, halbrundes oder eckiges Profil aufweist.

18. Welle (4) nach einem der vorhergehenden Ansprüche 11 bis 17,
wobei der Kühlkanal (21) in axialer Richtung parallel zur Wellenachse (5) verläuft.

19. Welle (4) nach einem der Ansprüche 11 bis 17,
wobei der Kühlkanal (21) in axialer Richtung spiralförmig um die Wellenachse (5) verläuft.

20. Welle (4) nach einem der vorhergehenden Ansprüche, wobei die Welle (4) zur Anordnung in einer Dampfturbine (1) ausgebildet ist und der Mantelbereich (15) im Einströmbereich (10) angeordnet ist.

21. Welle (4) nach Anspruch 20,
wobei die thermisch belastete Stelle im Bereich einer Frischdampfzuführung liegt.

22. Verfahren zur Herstellung einer Welle (4), gemäβ einem der vorhergehenden Ansprüche wobei ein Rohling auf eine Länge abgeschnitten und zu einer um eine Wellenachse (5) rotationssymmetrisch ausgebildeten Welle (4) geschmiedet wird,
wobei an einem im Betrieb der Welle (4) thermisch belasteten Welleneinströmabschnitt (13) ein Mantelbereich (15) um einen Kernbereich (14) angeordnet wird,
wobei für den Mantelbereich (15) und Kernbereich (14) unterschiedliche Materialien gewählt werden.

23. Verfahren nach Anspruch 22,
bei dem der Mantelbereich (15) als Hülse gefertigt und über den Kernbereich (14) geschoben wird.

24. Verfahren nach Anspruch 23,
bei dem die Hülse auf den Kernbereich (14) aufgeschweißt wird.

25. Verfahren nach Anspruch 23,
bei dem die Hülse auf den Kernbereich (14) aufgeschrumpft wird.

26. Verfahren nach einem der Ansprüche 22 bis 25,
bei dem für den Kernbereich (14) das Material 1 Gew.-% - 2 Gew.-% Cr-Stahl und für den Mantelbereich (15) das Material A617 verwendet wird.

27. Verfahren nach einem der Ansprüche 22 bis 25,
bei dem für den Kernbereich (14) das Material 1 Gew.-% - 2 Gew.-% Cr-Stahl und für den Mantelbereich (15) das Material A783 verwendet wird.

28. Verfahren nach einem der Ansprüche 22 bis 27,
bei dem ein Vorderteilstück (18),
in Richtung der Wellenachse (5) gesehen,
hinter einem Hinterteilstück (19) angeordnet wird, wobei der Kernbereich (14) zwischen dem Vorderteilstück (18) und dem Hinterteilstück (19) angeordnet wird.

29. Verfahren nach Anspruch 28,
bei dem das Vorderteilstück (18) und das Hinterteilstück (19) an das den Materialbereich und/oder an den Kernbereich (14) angeschweißt werden.

30. Verfahren nach den Ansprüchen 22 bis 29,
bei dem die Welle (4) nach der Schweißung bei Temperaturen zwischen 670°C und 730°C wärmebehandelt wird.

## Claims

1. Shaft (4) for a turbomachine,
wherein the shaft (4) comprises a shaft inflow section (13) which is formed rotationally symmetrically around the shaft axis (5),
and has a core region (14) and a cover region (15),
wherein the core region (14) is produced from a 1 wt% to 2 wt% Cr steel,
wherein the shaft inflow section (13) is designed for exposure to admission of a hot medium,
wherein the cover region (15) is arranged around the core region (14) and
the cover region (15) and core region (14) have different materials and
the cover region (15) encompasses the shaft inflow section (13),
**characterized in that**
the cover region (15) is produced from A617 material, wherein the A617 material has the following elements:
| | |
|---|---|
| 0.05 - 0.10 | wt% C, |
| <= 0.20 | wt% Si, |
| <= 0.20 | wt% Mn, |
| <= 0.010 | wt% P, |
| <= 0.010 | wt% S, |
| 20.0 - 23.0 | wt% Cr, |
| 8.5 - 10.0 | wt% Mo, |
| 0.70 - 1.40 | wt% Al, |
| 11.0 - 14.0 | wt% Co, |
| <= 0.50 | wt% Cu, |
| <= 2.0 | wt% Fe, |
| 0.20 - 0.60 | wt% Ti, |
| <= 0.006 | wt% B, |
| Residual Ni. | |

2. Shaft (4) for a turbomachine,
wherein the shaft (4) comprises a shaft inflow section (13), which is formed rotationally symmetrically around the shaft axis (5),
and has a core region (14) and a cover region (15), wherein the core region (14) is produced from a 1 wt% to 2 wt% Cr steel,
wherein the shaft inflow section (13) is designed for exposure to admission of a hot medium,
wherein the cover region (15) is arranged around the core region (14) and
the cover region (15) and core region (14) have different materials and
the cover region (15) encompasses the shaft inflow section (13),
**characterized in that**
the cover region (15) is produced from A783 material, wherein the A783 material has the following elements:
| | |
|---|---|
| ≤ 0.03 | wt% C, |
| ≤ 0.50 | wt% Si, |
| ≤ 0.50 | wt% Mn, |
| ≤ 0.015 | wt% P, |
| ≤ 0.005 | wt% S, |
| 2.50 - 3.50 | wt% Cr, |
| 2.50 - 3.50 | wt% Nb, |
| 5.0 - 6.0 | wt% Al, |
| ≤ 0.50 | wt% Cu, |
| 24.0 - 27.0 | wt% Fe, |
| 0.10 - 0.40 | wt% Ti, |
| 0.003 - 0.012 | wt% B, |
| 26.0 - 30.0 | wt% Ni, |
| Residual Co. | |

3. Shaft (4) according to Claim 1,
wherein the cover region (15) is formed as a sleeve.

4. Shaft (4) according to Claim 3,
wherein the core region (14) has the following elements:
| | |
|---|---|
| 0.28 - 0.34 | wt% C, |
| <= 0.15 | wt% Si, |
| 0.30 - 0.80 | wt% Mn, |
| <= 0.010 | wt% P, |
| <= 0.007 | wt% S, |
| 1.10 - 1.40 | wt% Cr, |
| 1.00 - 1.20 | wt% Mo, |
| 0.50 - 0.75 | wt% Ni, |
| 0.25 - 0.35 | wt% V, |
| <= 0.010 | wt% Al, |
| Residual Fe. | |

5. Shaft (4) according to one of the preceding claims,
wherein the cover region (15) is welded to the core region (14).

6. Shaft (4) according to one of Claims 1 to 4,
wherein the cover region (15) is shrunk onto the core region.

7. Shaft (4) according to one of the preceding claims,
wherein the cover region (15) is arranged in a cutout (16) which is located in the core region (14).

8. Shaft (4) according to one of the preceding claims,
which comprises a front section (18),
and a rear section (19) which is arranged aft of the front section, as seen in the direction of the shaft axis (5), wherein the core region (14) is arranged between the front section (18) and the rear section (19).

9. Shaft (4) according to Claim 8,
wherein the front section (18) and the rear section (19) are welded to the cover region (15) and/or to the core region (14).

10. Shaft (4) according to Claim 8 or 9,
wherein the front section (18) and the rear section (19) are produced from a 1 wt% to 2 wt% Cr steel.

11. Shaft (4) according to one of the preceding claims,
wherein cooling passages for conducting a cooling medium are formed between the cover region (15) and the core region (14).

12. Shaft (4) according to one of the preceding claims,
wherein the core region (14),
as seen in the direction of the shaft axis (5),
has at least one tooth-like tooth-core-projection (25) arranged on the outer circumference and the cover region (15) has a cover-region recess (26) which is formed complementarily to the tooth-core-projection (25),
wherein the tooth-core-projection (25) engages with the cover-region recess (26).

13. Shaft (4) according to Claim 16,
wherein the tooth-core-projection (25) has a radially outward pointing tooth-core-projection surface (27) and
the cover-region recess (26) has a radially inward pointing cover-region-recess surface (28),
wherein the tooth-core-projection (25) and the cover-region recess (26) are formed in such a way that the cooling passage (21) extends between the tooth-core-projection surface (27) and the cover-region-recess surface (28).

14. Shaft (4) according to one of Claims 1 to 11,
wherein the cover region (15),
as seen in the direction of the shaft axis (5),
has at least one tooth-like tooth-cover-projection arranged on the inner circumference and
the core region (14) has a core-region recess which is formed complementarily to the tooth-cover-projection,
wherein the tooth-cover-projection engages with the core-region recess.

15. Shaft (4) according to Claim 13,
wherein the tooth-cover-projection has a radially inward pointing tooth-cover-projection surface and
the core-region recess has a radially outward pointing core-region-recess surface,
wherein the tooth-cover-projection and the core-region recess are formed in such a way
that the cooling passage (21) extends between the tooth-cover-projection surface and the core-region-recess surface.

16. Shaft (4) according to Claim 11,
wherein the cooling passage (21) extends between a core-region cutout on the surface of the core region (14) and the radially inward pointing surface (17) of the cover region.

17. Shaft (4) according to Claim 16,
wherein the core-region cutout, as seen in the direction of the shaft axis (5), has a semicircular or polygonal profile.

18. Shaft (4) according to one of the preceding Claims 11 to 17,
wherein the cooling passage (21) extends in the axial direction parallel to the shaft axis (5).

19. Shaft (4) according to one of Claims 11 to 17,
wherein the cooling passage (21) extends spirally in the axial direction around the shaft axis (5).

20. Shaft (4) according to one of the preceding claims,
wherein the shaft (4) is designed for arranging in a steam turbine (1) and the cover region (15) is arranged in the inflow region (10).

21. Shaft (4) according to Claim 20,
wherein the thermally loaded point lies in the region of a live steam feed.

22. Method for producing a shaft (4) according to one of the preceding claims,
wherein a blank is cut to a length and forged to form a shaft (4) which is formed rotationally symmetrically around a shaft axis (5),
wherein at a shaft inflow section (13), which is thermally loaded during operation of the shaft (4), a cover region (15) is arranged around a core region (14),
wherein different materials are selected for the cover region (15) and core region (14).

23. Method according to Claim 22,
in which the cover region (15) is produced as a sleeve and pushed over the core region (14).

24. Method according to Claim 23,
in which the sleeve is welded onto the core region (14).

25. Method according to Claim 23,
in which the sleeve is shrunk onto the core region (14).

26. Method according to one of Claims 22 to 25,
in which for the core region (14) material consisting of 1 wt% to 2 wt% Cr steel is used and for the cover region (15) A617 material is used.

27. Method according to one of Claims 22 to 25,
in which for the core region (14) material consisting of 1 wt% to 2 wt% Cr steel is used and for the cover region (15) A783 material is used.

28. Method according to one of Claims 22 to 27,
in which a front section (18),
is arranged aft of a rear section (19), as seen in the direction of the shaft axis (5),
wherein the core region (14) is arranged between the front section (18) and the rear section (19).

29. Method according to Claim 28,
in which the front section (18) and the rear section (19) are welded to the cover region and/or to the core region (14).

30. Method according to Claims 22 to 29,
in which the shaft (4), after welding, is heat-treated at temperatures of between 670°C and 730°C.

## Revendications

1. Arbre ( 4 ) pour une turbomachine,
dans lequel l'arbre ( 4 ) comprend un tronçon ( 13 ) d'admission d'arbre,
qui est de révolution autour de l'axe ( 5 ) de l'arbre,
et comporte une zone ( 14 ) de coeur et une zone ( 15 ) d'enveloppe,
la zone ( 14 ) de coeur étant en un acier ayant de 1% en poids à 2% en poids de Cr,
dans lequel le tronçon ( 13 ) d'admission d'arbre est conçu pour l'alimentation en un fluide chaud,
dans lequel la zone ( 15 ) d'enveloppe est disposée autour de la zone ( 14 ) de coeur et
la zone ( 15 ) d'enveloppe et la zone ( 14 ) de coeur ont des matériaux différents et
la zone ( 15 ) d'enveloppe entoure le tronçon ( 13 ) d'admission d'arbre,
**caractérisé en ce que**
la zone ( 15 ) d'enveloppe est en le matériau A617, le matériau A617 ayant les éléments suivants :
de 0,05 à 0,10% en poids de C,
<= à 0,20 en poids de Si,
<= à 0,20 en poids de Mn,
<= à 0,010 en poids de P,
<= à 0,010 en poids de S,
de 20,0 à 23,0% en poids de Cr,
de 8,5 à 10,0% en poids de Mo,
de 0,70 à 1,40% en poids de Al,
de 11,0 à 14,0% en poids de Co,
<= à 0,50 en poids de Cu,
<= à 2,0 en poids de Fe,
de 0,20 à 0,60% en poids de Ti,
<= à 0,006 en poids de B,
le reste étant du Ni.

2. Arbre ( 4 ) pour une turbomachine,
dans lequel l'arbre ( 4 ) comprend un tronçon ( 13 ) d'admission d'arbre,
qui est de révolution autour de l'axe ( 5 ) de l'arbre,
et comporte une zone ( 14 ) de coeur et une zone ( 15 ) d'enveloppe,
la zone ( 14 ) de coeur étant en un acier ayant de 1% en poids à 2% en poids de Cr,
dans lequel le tronçon ( 13 ) d'admission d'arbre est conçu pour l'alimentation en un fluide chaud,
dans lequel la zone ( 15 ) d'enveloppe est disposée autour de la zone ( 14 ) de coeur et
la zone ( 15 ) d'enveloppe et la zone ( 14 ) de coeur ont des matériaux différents et
la zone ( 15 ) d'enveloppe entoure le tronçon ( 13 ) d'admission d'arbre,
**caractérisé en ce que**
la zone ( 15 ) d'enveloppe est en le matériau A783,
le matériau A783 ayant les éléments suivants :
<= à 0,03 en poids de C,
<= à 0,50 en poids de Si,
<= à 0,50 en poids de Mn,
<= à 0,015 en poids de P,
<= à 0,005 en poids de S,
de 2,50 à 3,50% en poids de Cr,
de 2,50 à 3,50% en poids de Nb,
de 5,0 à 6,0% en poids de Al,
<= à 0,50 en poids de Cu,
de 24,0 à 27,0% en poids de Fe,
de 0,10 à 0,40% en poids de Ti,
de 0,003 à 0,012% en poids de B,
de 26,0 à 30,0% en poids de Ni,
le reste étant du Co.

3. Arbre ( 4 ) suivant la revendication 1,
dans lequel la zone ( 15 ) d'enveloppe est constituée en manchon.

4. Arbre ( 4 ) suivant la revendication 3,
dans lequel la zone ( 14 ) de coeur comporte les éléments suivantes :
de 0,28 à 0,34% en poids de C,
<= à 0,15 en poids de Si,
de 0,30 à 0,80% en poids de Mn,
<= à 0,010 en poids de P,
<= à 0,007 en poids de S,
de 1,10 à 1,40% en poids de Cr,
de 1,0 à 1,20% en poids de Mo,
de 0,50 à 1,75% en poids de Ni,
de 0,25 à 0,35% en poids de V,
<= à 0,010 en poids de Al,
le reste étant du Fe.

5. Arbre ( 4 ) suivant l'une des revendications précédentes, dans lequel la zone ( 15 ) d'enveloppe est soudée à la zone ( 14 ) de coeur.

6. Arbre ( 4 ) suivant l'une des revendications 1 à 4,
dans lequel la zone ( 15 ) d'enveloppe est rétreinte sur la zone inférieure.

7. Arbre ( 4 ) suivant l'une des revendications précédentes, dans lequel la zone ( 15 ) d'enveloppe est disposée dans un évidement ( 16 ) se trouvant dans la zone ( 14 ) de coeur.

8. Arbre ( 4 ) suivant l'une des revendications précédentes, qui comprend une pièce ( 18 ) avant,
une pièce ( 19 ) arrière disposée derrière, considéré dans la direction de l'axe ( 5 ) de l'arbre,
la zone ( 14 ) de coeur étant disposée entre la pièce ( 18 ) avant et la pièce ( 19 ) arrière.

9. Arbre ( 4 ) suivant la revendication 8,
dans lequel la pièce ( 18 ) avant et la pièce ( 19 ) arrière sont soudées à la zone ( 15 ) d'enveloppe et/ou à la zone ( 14 ) de coeur.

10. Arbre ( 4 ) suivant la revendication 8 ou 9,
dans lequel la pièce ( 18 ) avant et la pièce ( 19 ) arrière sont en un acier à 1% en poids à 2% en poids de Cr.

11. Arbre ( 4 ) suivant l'une des revendications précédentes, dans lequel des canaux de refroidissement pour guider un fluide de refroidissement sont constitués entre la zone ( 15 ) d'enveloppe et la zone ( 14 ) de coeur.

12. Arbre ( 4 ) suivant l'une des revendications précédentes, dans lequel la zone ( 14 ) de coeur a,
considéré dans la direction de l'axe ( 5 ) de l'arbre,
au moins une saillie ( 25 ) dent-coeur dentée, disposée sur le pourtour extérieur et
la zone ( 15 ) d'enveloppe a une cavité ( 26 ) de zone d'enveloppe constituée de manière complémentaire de la saillie ( 25 ) dent-coeur,
la saillie ( 25 ) dent-coeur pénétrant dans la cavité ( 26 ) de zone d'enveloppe.

13. Arbre ( 4 ) suivant la revendication 12,
dans lequel la saillie ( 25 ) dent-coeur a une surface ( 27 ) dent-coeur tournée radialement vers l'extérieur et
la cavité ( 26 ) de zone d'enveloppe a une surface ( 28 ) de cavité de zone d'enveloppe tournée radialement vers l'intérieur,
la saillie ( 25 ) dent-coeur et la cavité ( 26 ) de zone d'enveloppe étant telles que le canal ( 21 ) de refroidissement s'étend entre la surface ( 27 ) de saillie dent-coeur et la surface ( 28 ) de cavité de zone d'enveloppe.

14. Arbre ( 4 ) suivant l'une des revendications 1 à 11,
dans lequel la zone ( 15 ) d'enveloppe a,
considéré dans la direction de l'axe ( 5 ) de l'arbre,
au moins une saillie dent-enveloppe dentée, disposée sur le pourtour intérieur et
la zone ( 14 ) de coeur a une cavité de zone de coeur complémentaire de la saillie dent-enveloppe,
la saillie dent-enveloppe pénétrant dans la cavité de zone de coeur.

15. Arbre ( 4 ) suivant la revendication 13,
dans lequel la saillie dent-enveloppe a une surface de saillie dent-enveloppe tournée radialement vers l'intérieur et la cavité de zone de coeur a une surface de cavité de zone de coeur tournée radialement vers l'extérieur,
dans lequel la saillie dent-enveloppe et la cavité de zone de coeur sont constituées de manière à ce que le canal ( 21 ) de refroidissement s'étende entre la surface de saillie dent-enveloppe et la surface de cavité de zone de coeur.

16. Arbre ( 4 ) suivant la revendication 11,
dans lequel le canal ( 21 ) de refroidissement s'étend entre un évidement de zone de coeur sur la surface ( 14 ) de coeur et la surface ( 17 ), tournée radialement vers l'intérieur, de la zone d'enveloppe.

17. Arbre ( 4 ) suivant la revendication 16,
dans lequel la cavité de zone de coeur a, considéré dans la direction de l'axe ( 5 ) de l'arbre, un profil hémicirculaire ou cunéiforme.

18. Arbre ( 4 ) suivant l'une des revendications précédentes 11 à 17,
dans lequel le canal ( 21 ) de refroidissement s'étend dans la direction axiale parallèlement à l'axe ( 5 ) de l'arbre.

19. Arbre ( 4 ) suivant l'une des revendications 11 à 17,
dans lequel le canal ( 21 ) de refroidissement s'étend dans la direction axiale en forme de spirale autour de l'axe ( 5 ) de l'arbre.

20. Arbre ( 4 ) suivant l'une des revendications précédentes, dans lequel l'arbre ( 4 ) est constitué pour être mis dans une turbine ( 1 ) à vapeur et la zone ( 15 ) d'enveloppe est disposée dans la zone ( 10 ) d'admission du courant.

21. Arbre ( 4 ) suivant la revendication 20,
dans lequel le point chargé thermiquement se trouve dans la zone d'un apport de vapeur fraîche.

22. Procédé de fabrication d'un arbre ( 4 ) suivant l'une des revendications précédentes,
dans lequel on découpe une ébauche à une longueur et on la forge en un arbre ( 4 ) de révolution autour d'un axe ( 5 ) d'arbre,
dans lequel on met sur un tronçon ( 13 ) d'admission d'arbre chargé thermiquement lorsque l'arbre ( 4 ) fonctionne une zone ( 15 ) d'enveloppe autour d'une zone ( 14 ) de coeur,
dans lequel on choisit des matériaux différents pour la zone ( 15 ) d'enveloppe et pour la zone ( 14 ) de coeur.

23. Procédé suivant la revendication 22,
dans lequel on fabrique la zone ( 15 ) d'enveloppe sous la forme d'une manchon et on l'emmanche sur la zone ( 14 ) de coeur.

24. Procédé suivant la revendication 23,
dans lequel on soude le manchon à la zone ( 14 ) de coeur.

25. Procédé suivant la revendication 23,
dans lequel on rétreint le manchon sur la zone ( 14 ) de coeur.

26. Procédé suivant l'une des revendications 22 à 25,
dans lequel on utilise pour la zone ( 14 ) de coeur de l'acier ayant de 1% en poids à 2% en poids de Cr et pour la zone ( 15 ) d'enveloppe le matériau A617.

27. Procédé suivant l'une des revendications 22 à 25,
dans lequel on utilise pour la zone ( 14 ) de coeur de l'acier ayant de 1% en poids à 2% en poids de Cr et pour la zone ( 15 ) d'enveloppe le matériau A783.

28. Procédé suivant l'une des revendications 22 à 27,
dans lequel on met une pièce ( 18 ) avant,
considéré dans la direction de l'axe ( 5 ) de l'arbre,
derrière une pièce ( 19 ) arrière,
la zone ( 14 ) de coeur étant disposée entre la pièce ( 18 ) avant et la pièce ( 19 ) arrière.

29. Procédé suivant la revendication 28,
dans lequel on soude la pièce ( 18 ) avant et la pièce ( 19 ) arrière à la zone de matière et/ou à la zone ( 14 ) de coeur.

30. Procédé suivant la revendication 22 à 29,
dans lequel on traite thermiquement à des températures comprises entre 670° C et 730° C l'arbre après la soudure.
